# EUROPEAN PATENT APPLICATION

(11) **EP 1 696 355 A1**
(43) Date of publication of application: **30.08.2006**
(21) Application number: 06011905.4
(22) Date of filing: 25.09.2001
(51) Int. Cl.: G06F 17/40, G06F 17/30

(54) **Automatic meta-data creation through context sensing**

(62) Divisional of application: 01122969.7
(71) Applicant: Sony Deutschland GmbH, 10785 Berlin (DE)
(72) Inventor: Kovacs, Ernö, 70327 Stuttgart (DE); Hohl, Fritz, 70327 Stuttgart (DE)
(74) Representative: Körber, Martin Hans

(57) **Abstract**

An automatic meta-data creation through context sensing is provided by a method involving the steps of creating content-data, sensing context information (18) related to the content-data from sources of related context information (13, 14, 15, 16, 17, 370), gathering meta-data representing context information from detected sources of context information, and storing content-data and meta-data, and further by a system for creating meta-data for content-data comprising context sensing means (340) for sensing context information related to the content-data by detecting sources of context information, meta-data gathering means (320) for gathering meta-data from detected sources of context information, and storing means (331) for storing content-data and meta-data.

## Description

The present invention relates to the field of context-aware content recording, in particular to gathering meta-data describing the context of a content recorded.

Today, more and more information is generated, processed and published electronically. In this sea of information meta-data is important to classify, retrieve and manipulate the electronic content. Meta-data are used to augment pieces of content (e.g. a video sequences) with additional information. This information can e.g. be used for retrieving the content piece as part of a large multimedia archive. In a TV production e.g., information like the current production name, the attending persons, and further information about the production form complementary information about a recorded scene, which can be stored as meta-data and later be used in production or archiving to assist in manipulating, storing and retrieving the specific scene or parts of it as content.

Another example for meta-data is the name of the owner and authors of an electronic content piece. Electronic archives and publishing systems can use meta-data to classify and retrieve information. In today's Internet, search engines try to classify multimedia content and deliver meaningful results. Usually search engines deduce the meta data from the web pages that contain the multimedia objects. Nevertheless, the accuracy of the search could be improved, if meta-data were directly embedded into the media object.

Entering meta-data into a system is a tedious, repetitive process, that is often delayed or forgotten. After the information is stored, entering the required meta-data in all desired details is an additional step involving considerable effort. In the area of electronic video production, this has already lead to tools that can automatically classify scenes (e.g. of a movie) in order to generate the appropriate meta-data.

Meta-Data associated with content-data can be used as an additional source of information like e.g. meta-data containing the title and interpreter of a piece of music. This information can for instance be used to query a music archive for all available pieces of music of a special interpreter.

Meta-Data associated with content-data may also be used as control information for a further processing of a piece of content. In this matter GB 2354 104 A discloses an editing system wherein meta-data are used to automate an editing of content-data by comparing the meta-data supplied with the content-data with template meta-data.

Meta-data that describe context data are e.g. known from context-aware computing applications. A most simple example is that of a login procedure. Hereby, when a user logs into a server from a remote terminal providing his login-name and password as content-data, meta-data describing the users context, i.e. logging in from that specific terminal, is submitted along with the user specific content-data in form of for instance a terminal-id. Then, the server evaluates the context representing meta-data to see if the user is allowed to use that special terminal or not, and grants or denies access accordingly.

Context is within this specification understood as any information that can be used to characterise the situation of an entity, like e.g. a person, an object, an event, a reason or the like. A situation may e.g. be characterised by specifying a project, a location, environmental parameters, a persons rank, special relations to other entities or the like. A context of content-data therefore comprises the situation in which or for which the content-data are created and the situation of the entities represented within the content-data.

Although context information is usually very helpful when used along with the content-data, one problem is, that when content-data like e.g. different takes of a movie are produced, meta-data representing context information is rarely added automatically. So already at the beginning of the production chain, valuable information might be lost.

It is therefore an object of the present invention to propose a method and a system which automatically associate content-data with related context describing information.

This object is achieved by a method of creating meta-data for content-data involving a creation of content-data, a sensing of context information related to the content-data from sources of related context information, a gathering of meta-data representing context information from detected sources of context information, and storing the content-data and meta-data.

The above object is further achieved by a system for creating meta-data for content-data according to the method described above, with context sensing means for sensing context information related to the content-data by detecting sources of context information, meta-data gathering means for gathering meta-data from detected sources of context information, and storing means for storing content-data and meta-data.

Further, the above object is achieved by a software product for creating meta-data for content-data adapted to perform a method according to the method described above when being stored on a storage means and executed by a processing means

The proposed method and system allows an automatic gathering of meta-data related to content-data such, that all information depicting the situation of the context-data generation are reliably sensed, associated to the context-data, and stored. The creation process of the meta-data is ideally added to the creation of the content-data itself.

Further advantageous features are claimed in the respective sub-claims.

The context information is advantageously retrieved from the content-data itself, so that information embedded in the content-data can be used as context information.

In a preferred embodiment of the present invention, the sources of context information are accessed via a wireless and/or wired network allowing easy access to any kind and a vast amount of network-compatible entities and devices. Further advantageously, at least a part of the data transmission to and from sources of related context information is implemented employing a public key infrastructure.

Context information is favourably prepared prior to creating content-data. Further, a sensing of context information can advantageously be configured to focus on certain context matter to ensure, that meaningful context information is favoured against junk information. Only meta-data complying one or more rules may further be stored, thus allowing to define a criterion or a set of criteria for what to select from the offered context describing meta-data. Further, meta-data are preferably stored within the content-data, so that a physical association between content and context is achieved.

According to an advantageous development, a source of context information provides personal information data about a user utilising it thereby allowing to add personal information about people contributing to the content created. Furthermore, a source of context information advantageously provides information concerning the location of an entity. This way, geographical data can be added to the context. A source of context information may further advantageously provide situation identifying information for giving access to special information, which can otherwise not be retrieved or compiled from usually available sources of context information.

In a preferred embodiment of the present invention, a source of context information has a context serving means for giving access to the context information provided, which simplifies a sensing of context and a retrieval of context information. Further, a source of context information advantageously shows an access control to regulate access to the context information so that only suitable information is delivered to a certain context sensing mechanism, and in particular that no classified information is delivered to unauthorised entities.

The system according to the present invention can e.g. be implemented in techniques from professional movie productions over home video to professional or semi-professional audio production.

In the following description, the present invention is explained in more detail in relation to special embodiments and to the enclosed drawings, in which
figure 1 shows a scenario implementing context-sensing according to the present invention,
figure 2 schematically shows an application of the present invention in a professional movie production,
figure 3 shows a device configuration according to the present invention,
figure 4 shows a context gathering unit accessing different sources of context information through a context access unit,
figure 5 is a block diagram showing a structure for a source of context information,
figure 6 shows different parts of the recording act,
figure 7 shows different playout modes, and
figure 8 shows the set-up of devices prior to a recording process.

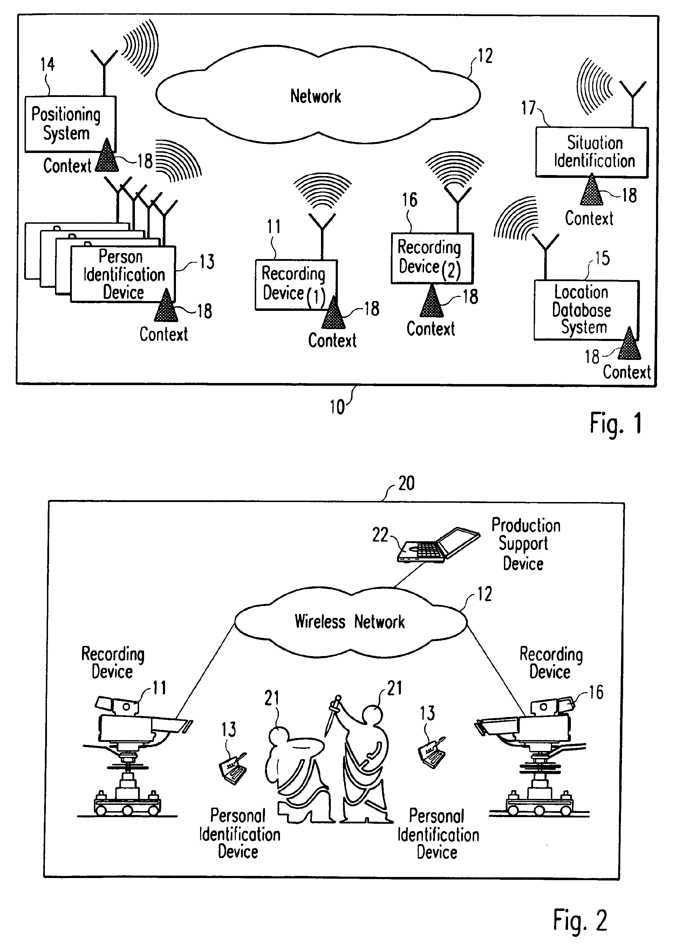

Figure 1 shows a scenario 10 implementing a method to automatically gather meta-data information at content creation time using wireless technologies. Various pieces of context information 18 from entities/units currently present are sensed by a context-sensing mechanism and automatically embedded into the produced content. The figure shows a recording device 11 (recording device (1)) using a wireless network 12 as e.g. Bluetooth, Hiperlan/2, IEEE802.11 or the like, to connect to various other entities and devices, respectively. These devices/entities offer services that can be used to build the current context of the recording device 11. Examples presented for such devices/entities in figure 1 are a person identification device 13 (PID), a positioning system device 14 (PSD) or position determination device 14 (PDD), a location database system 15 (LDS), other recording devices 16 (ORD) like recording device (2), and a situation identification device 17 (SID).

A recording device 11 is a device for recording content-data. This recording usually involves the process of converting physical signals or stimuli into electrical signals, the processing of the signals and saving the result on one or more media. Examples for recording devices which can be used according to the present invention are Digital Camcorders, Digital Photo Cameras, Walkmans/DiscMans, Dictaphones, Laptops, Professional Cameras, Audio Studio Equipment, 3D Measurement Devices, and many others of that kind.

A PID 13 is a device identifying persons. More specifically it may provide information about one or more users in the vicinity of the recording device 11. There might be different devices involved. Some devices might present their information directly through a local (W)PAN or (W)LAN. Some might involve the use of a network service. For example, GSM phones indicate their positions to the network operator. The network operator advantageously allows an access to a context service that delivers the information about the persons.

A PSD 14 or PDD 14, respectively, is a device delivering its current position or the position of a person it is bound with. PSDs and PDDs know their current position. A variety of know state-of-the-art technologies can be used, e.g. GPS, GSM-network based position determination, stationary location beacons, and many more. This information can be transmitted to other devices which can determine their position from this.

A LDS 15 allows to map a position to the name of a current location. A position information can for instance be extended by this entity to not only include technical locations like longitude/latitude, but logical position like an address, a name of a certain place, names of countries, states, cities streets, street numbers, room numbers, or the like.

A SID 17 identifies the situation by providing information specific to the current situation. To take a movie production as an example, a SID might provide information about the production like e.g. the production number, the production title, the head of the production and the like. For personal use, SIDs can provide information like the name of a journey, its duration, places, etc. SIDs can be carried out for being customised by an owner.

An ORD 16 is another content recording device in the vicinity or reach of the primary content-creating device 11 recording at the same time. Like the other devices and entities, an ORD provides context information 18. This can be used later to identify material that was taken at the same scene at the same time.

Not shown in figure 1, but nonetheless important sources for context-information are local sensors, like GPS sensors, Cell Phones, Motion Detection, Light Sensors, Sound Sensors, Touch Sensors, Gyroscopes, Direction Sensors, Location-Sensors, Bluetooth- based Sensors or the like, which detail a current situation. In addition to the above cited network systems, GSM, UMTS, IrDA, WLAN, Ethernet, TokenRing, and ATM are known to work with the presented invention, but many others are likely to be incorporated into a system according to the present invention.

Figure 2 illustrates the usage of the present invention in a professional movie production 20. PIDs 13 are available for all actors 21 and support staff like the director and producer. Various recording devices like 11 and 16 are used. Each of them senses the other and records an internal identifier to the content part that is captured at the same time. In this way, an editor can easily retrieve the content pieces that were taken at the same time. A production support device 22 works as a SID and gives supporting information like the position, the situation, the name of the production, the production identification, the time and date, the name of the supervisor and plenty of more production related information more.

All devices of the set communicate locally using a wireless network to enable the automatic meta-data generation. This set of device includes recording devices with an additional context gathering module. Whenever a recording device records electronic content, the context gathering module automatically gathers the current context of the recording device and of devices or entities in the vicinity which also provide context information. It extracts information that it might wish to keep out of the available context information. This information is stored together with the recorded content. Of course, the recording format used by the device must enable the use of meta-data to describe each part of the content.

A production planner of a professional production company will prepare a device configuration for the set of devices used in a take in advance. Such a device configuration can contain a specification that defines what context information to record, in which interval to record the items etc.. This device configuration can be loaded into the recording device and than used during recording. Different device configurations might be loaded, and a record operator can select an appropriate one by switching dynamically between the configurations in the course of a production.

A production planer can further set-up pre-defined production data like e.g. the title and number of a production, the date, responsible persons, the location, current activities, scenes and the like, and load these into the devices emitting context information. One of these devices could be PIDs available for actors. Future mobile phones might be PIDs. Another class of devices might be dedicated PIDs, used to provide the automatic context. These devices can be laptops or dedicated hardware pieces. A third group of devices are PDDs that provide information about a current location. PDDs can directly be integrated in a recording device or any other context information providing device used. PDDs can be implemented using GPS (Global Positioning System) receivers, within a mobile phone utilising cellular network capabilities or with any apparatus capable of retrieving location information.

In a similar manner also video amateurs may for instance set-up at home device configurations to prepare their camcorders or the like for a holiday journey. To ensure, that all information desired will be captured when the recording devices are used, PIDs are e.g. prepared with the names of the family members, PDDs pre-configured for delivering the desired location information and so on. Each family member is later equipped with a PID. The camcorder is set to store the name of the attending persons as well as the location were the shooting was done.

Alternatively, in the case of unavailable PIDs and/or PDDs, a camcorder is equipped with a manual input means to input the respective data like e.g. person, object or location identifying information for a shot.

The central part of the meta-data production according to the present invention is the context sensing mechanism provided by the context-gathering subsystem allowing a uniform access to local sensors, near-by-devices, and information servers in the network. The physical embodiment and implementation of the context-gathering subsystem may vary with the application. It may e.g. be integrated in a recording device, set-up as a device of its own or be for instance a part of a co-ordinating entity like a production support device. The context-gathering subsystem takes care that context information like e.g. persons present at the site of a movie shooting, the time of the shooting, the location of the shooting, production information, temperature or humidity as delivered from local sensors, and many other information useful for the production is made available as context information for the creation of content related meta-data.

A recording device can automatically pick up the provided context information and add it automatically to the recorded content. During shooting a movie e.g., the camera automatic records the meta-data sensed from the actors and the surrounding. Later, in the production process, the sensed meta-data is kept and processed. As all material is stored in an archive, meta-data can be used to retrieve the content pieces later on. The meta-data created during the production of a DVD for example might be stored on that DVD to include the requested secondary or context information respectively. During post production, this information might then be automatically extended through additional and derived information. A special DVD player mode will display the meta-information in a side bar or as a kind of overlay over the scene.

Another example for integrating meta-data with content-data are digital images. A digitally captured picture might be associated with the location where it was taken, but also with the name of the persons who where close to the picture taker or just the ones on the picture. This can be achieved by sensing the people nearby. Furthermore, their position can be checked against the cameras view angle, resulting in the name of the people close by. Before putting the picture on the Web, the owner might decide to extract the names of the persons and put them in a side bar close to the picture.

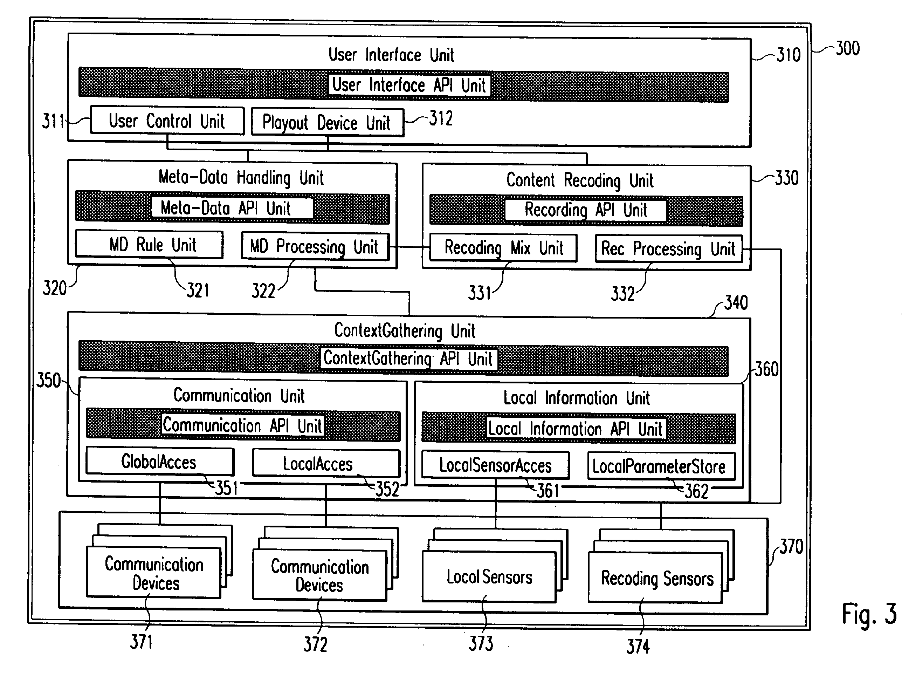

Figure 3 shows a device configuration 300 according to the present invention. The main components of the system are the User Interface Unit 310, the Meta-Data Handling Unit 320, the Content Recording Unit 330, the Context Gathering Unit 340, and the Context Information Providing Unit 370. The term unit in this context refers to a logical entity or a group of logical entities and does not mean, that it has to be invoked as a special device. Every unit can be implemented in form of software being stored in storing means and executed by processing means. This is also true for entities implemented as a device, so that the hardware can be emulated by software being stored in storing means and executed by processing means. All sub-units are equipped with an Application Programmable Interface (API) for handling the requests and data exchange, respectively, between the different sub-units.

The User Interface Unit 310 provides the input/output facilities for the user. Through the User Control Unit 311 a user can control, in the simplest case start or stop a recording. The Playout Device Unit 312 controls a playing back of the recorded content-data and the recorded meta-data. Both, the User Control Unit 311 and the Playout Device Unit 312 are connected to the Meta-Data Handling Unit 320 and the Content Recording Unit 330 respectively.

The Meta-Data Handling Unit 320 collects information like e.g, from the Context Gathering Unit and derives the meta-data from these information. The MD Rule Unit 321 contains the rules that determine what meta-data to record. The MD Processing Unit 322 forwards the meta-data to the Content Recording Unit 330, which records meta-data and normal content-data. The Recording Mix Unit 331 merges meta-data and normal content-data. The Rec Processing Unit 332 executes the recording process.

The Context-Gathering Unit 340 gathers context information either from local devices like for instance local sensors 373 and recording sensors 374 with the Local Information Unit 360 or by communicating with other devices 371 or 372 over the Communication Unit 350. The context-gathering process uses any local network to search for other devices (device discovery) and for services offered, from this devices (service discovery). Communication devices can be accessed globally through a WAN like e.g. the Internet, GSM, UMTS or any other network that covers large areas. To restrict the offered information either geographic and/or logical areas like e.g. buildings, additional network services help to provide registration/lookup services for entities. Wireless LAN-networks cover a small area of about 100 to 400 meter and a limited amount of users. Usually they need a base station, which also can act as an access point to the Internet or other networks. Personal area networks (PAN) cover the immediate vicinity of a user. Their range of transmission typically covers about half a meter up to ten meters. They usually form a spontaneous network whenever the need to communicate arises. Examples for PANs are: Bluetooth, Infrared, HomeRF, and Body Area Networks.

Context-gathering involves device and service discovery followed by information retrieval. Depending on the available network infrastructure, different means to discover devices and/or services can be used. Bluetooth offers network services to discover other nearby devices and the services they are offering. In IP-based networks, technologies like HAVi, Jini, Universal Plug&Play and others are offering discovery mechanisms. The Ad-Hoc Computing manager introduced in the European patent application EP-A-00 124 472 offers device discovery, service discovery and virtual device configuration. Mechanisms take over the important task to limit the discovery aspects to the required areas or objects.

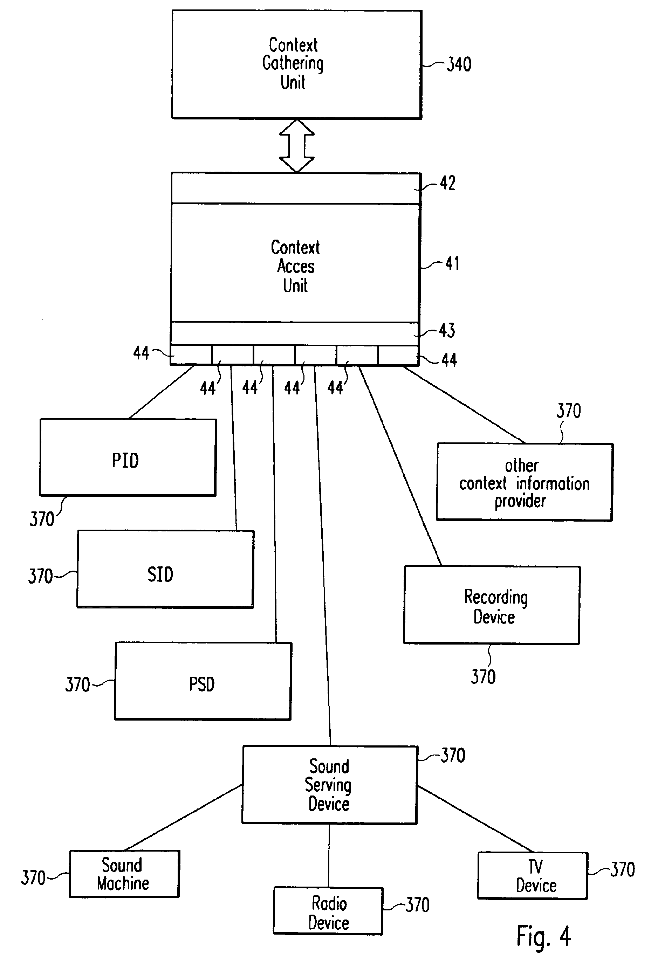

Depending on the type of device and service available, the Context Gathering Unit 340 selects the information it needs to retrieve from the devices 371, 372, 373 and 374. Unfortunately, it is unlikely that there will be a common access means and a uniform information representation among all the devices. Therefore, the information retrieval process is delegated to a context access unit 41 as shown in Figure 4.

Context access units 41 offer a uniform retrieval interface 42 to the Context Gathering Unit 340, but use internally the access means 44 required to access the desired piece of information. Depending on what information is required, different right access means like e.g. a context exchange protocol or a network management protocol are used. They communicate with peer units in the target context-delivery device. The context access is executed and the data are delivered via the Context Gathering Unit 340 to the Meta-data Handling Unit 320. In short, context access units 41 understand different data formats and transform the context information retrieved from sources of context information 370 into a uniform data model understood by the Context Gathering Unit 340. One candidate for this data model could be key value pairs, wherein the key uniquely identifies the data and the data source. This is achieved by using a hierarchical name space for the key.

During the context access, the security settings of the context source is checked by a security handling means 43. This might result in denying the access to some or all of the information. Further communication steps might be required to gain access. Furthermore, the use of a Public-Key-Cryptographic infrastructure can be necessary to gain the required access.

There are several ways to access context data. One example is to access all stored information attributes sequentially. Another example is to provide a retrieval expression like e.g. a regular expression, a SQL statement or an XML Path expression, that is evaluated and results in a set of desired context information.

A special context information is location. The position of an entity like a person, device, place, etc. can be described through either coordinates like amongst others longitude/latitude, through logical names with e.g. hierarchical structure as /de/bw/stuttgart/Stuttgarter-Strasse) or the like.

A context access unit 41 can be one of the communication devices 371 or 372 to which the Communication Unit 350 is linked to by means of a network of local or wide area like e.g. global extension. The access to globally available entities is controlled by the Communication Units 350 Global Access sub-unit 351, whereas the access to resources in close ranges is controlled by the Local Access sub-unit 352. An example for a global available entity 371 is an Internet access module, which is able to gather data from a global service like a mobile service portal. In close range accessible communication devices 372 are e.g. with e.g. Bluetooth extensions ad-hoc networked PIDs, PSDs and/or an SID.

External local sensors 373 deliver information like for instance the current time, the current position (e.g. using a GPS), the alignment of a recording device or the like. In other words, local sensors deliver information about the state of the Content Recording Unit or its environment. Recording sensors 374 like e.g. CCDs are used to capture the content-data for the recording step others process the content-data in order to retrieve meta-data directly from the content itself.

Information retrieved from the sources of context information 370 by the Context Gathering Unit 340 is handed to the Meta-data Handling Unit 320 as pure data and analysed there. A special data structure, the device configuration of the Meta-data Handling Unit 320 defines what of that pure data is to become meta-data. The data are then transformed into the format used to store meta-data, and finally written to the recording media, preferably together with the original content-data like e.g. a video.

Meta-data can be handled in different formats. They can be represented by database tables or as a hierarchical tree of information objects. Which information format is used depends mostly on the way the meta-data are stored at the recording device. Languages based on the set of XML standards are gaining acceptance in the industry and are favourably used in this invention. Meta-data can be associated with content in various ways. They can be embedded into the content or stored together with the content. They can further be stored on different media than the content.

The set-up of a device is described by device set-up data (DSD). In the Meta-data handling Unit 320, the DSD is represented by the device configuration. In sources of context information 370 DSD can describe the context-data that shall be recorded as part of the meta-data of the content. This can be implemented by e.g. providing a regular expression matching the name of the context attribute, a SQL statement, by providing a Xpath expression or the like. Other parts of the DSD can define time intervals in which the information is to be recorded.

Seen from an engineering point of view, the device configuration 300 of Figure 3 can be interpreted as a composition of a recording device with a built in ability to record meta-data and several sources of context information 370. The recording unit then consists of several sub-units: a content recording unit 330 similar to state of the art recording units and with a user interface 310, a meta-data handling unit 320, and a context gathering unit 340.

The main difference between a recording unit according to the present invention and a prior art recording unit is its ability to create meta-data on the basis of context information retrieved from that sources of context information 370, which are then in the Content Recording Unit 330 associated with the content-data obtained from the Rec Processing Unit 332 by the Recording Mix Unit 331. On analogue magnetic tapes, a separate recording track can e.g. capture the meta-data. In a digital recording format, additional fields might be used to contain the information. In another scenario, watermarking technology can be used to encode the information directly into the recorded media.

The Meta-data Handling Unit 320 is responsible for handling meta-data. This involves filtering and storing information obtained from the Context Gathering Unit 340. As already mentioned, meta-data can be derived from local storage, local sensors, or context-gathering modules. The MD Rule Unit 321 defines which meta-data to store. The MD Processing Unit 322 takes over the context-data from the Context Gathering Unit 340 and forwards it to the Content Recording Unit 330.

The Local Information Unit provides access to locally stored information and build-in sensors. Local information is stored in the local parameter store 362. This can be e.g. an owner of the device, addresses of networked services, etc. A local sensor access unit 361 provides access to local sensor equipment. That might be GPS-sensors, motion sensors, light detectors, humidity sensors or the like.

The central functionality according to the present invention is the automatic context sensing mechanism provided by the Context Gathering Unit 340. It uses the Communciation Unit 350 to monitor the environment and retrieves available context sources. These units execute the real context access. As there might be many different ways to retrieve the context, many different context access units might be part of the device. An important advancement of the current state-of-the-art is that this unit provides a uniform API allowing all type of context data to be detected and to be accessed.

Each of this units can be implemented in several different ways, depending on the desired technical key data. In some devices, they are implemented as separate hardware modules, in others as pure software units. Furthermore, different implementations for the real process can exist. For example, in order to have a fast context gathering, access can be executed in parallel. As this shortens the time required to gather the context-data, it will increase the power consumption and the complexity of the system, as the requests need to be synchronised and protected against each other.

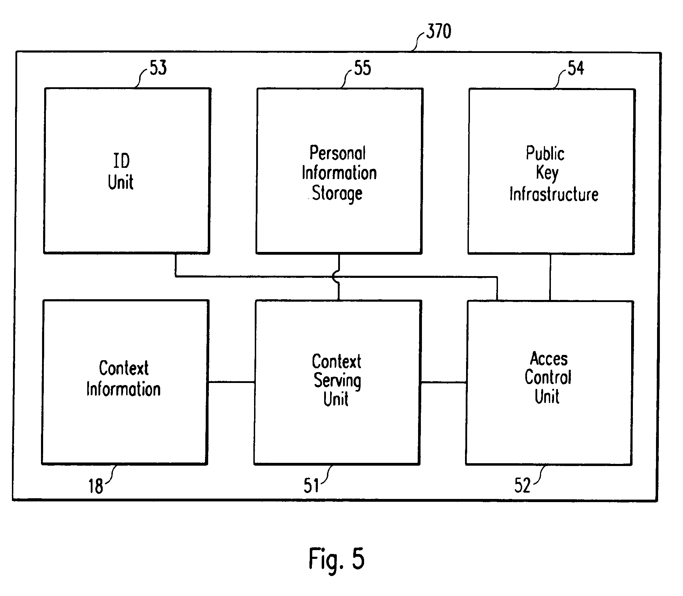

Sources of context information 370 are usually devices or services external to the recording device. In general they comprise, as shown in Figure 5, a context serving unit 51 and probably an access control unit 52. Further they can be equipped with an identification unit 53, sometimes a PKI (Public Key Infrastructure) component 54, and in the case of a PID also with a personal information storage 55.

The context serving unit 51 gives access to the context information 55 and 56, whereby the information is either delivered to devices in the vicinity or to network operators. The access control unit 52 grants or denies access to the context-data based on various factors like the identity of the accessing entity, the access control rights associated with the individual context information and the like.

An identification unit 53 allows to identify a person using the context serving unit 51 by e.g. using biometric information like a fingerprint, retina scans, or similar techniques to identify the user. Alternatively or additionally, a PIN code system or a password system for identifying a user might be provided. Additional mechanisms like a challenged-response module for re-verifying a users identity or a combination of several existing mechanisms can be used to improve security.

The identification unit 53 can be combined with a public key infrastructure (PKI) component 54 allowing to issue secure and signed information. The PKI component can of course also be implemented without an identification unit.

The personal identification storage unit 55 contains information describing a current user. Personal information for many prospective users can be stored within this unit, whereby the identification unit takes care, that only that of the current is released as context-data. Personal information for many users may be stored in this storage 55 with a pre-set-up technique as described above.

For SIDs, the context information storage 56 is formed by a situation description unit and contains the description of the current situation. An I/O unit, which is not shown in Figure 5 allows human users to change the situation information on the spot. The storage might store several different situation data and allow to switch dynamically between them. Furthermore, the SID unit might be part of more sophisticated units, e.g. a PDA, a Notebook, a Laptop or the like.

In Position determining devices (PDDs), the context information storage 56 is combined with a means for determining the current position of the device or an entity within its range. The position information is then treated as context information.

To improve the usage of the invention, a separate set-up process to configure a recording device and/or a source of context-information is provided. According to a favourable embodiment of the present invention, the configuration can be set-up on a central unit and then be distributed via a network or a physical medium like a data-disk or a Memory Stick to the different devices of the device configuration 300.

Accordingly, meta-data describing situations can be set-up in advance to their usage. For describing a production process, a production manager might set-up a device that contains production data like production name, production number, site, etc. This data can be pre-recorded or changed on site, e.g. from one scene to the other. Hereby, several different situations descriptions are possibly be stored, but only one is set active, when needed.

In the following, the present invention is explained in more detail with respect to three conceptional usecases.

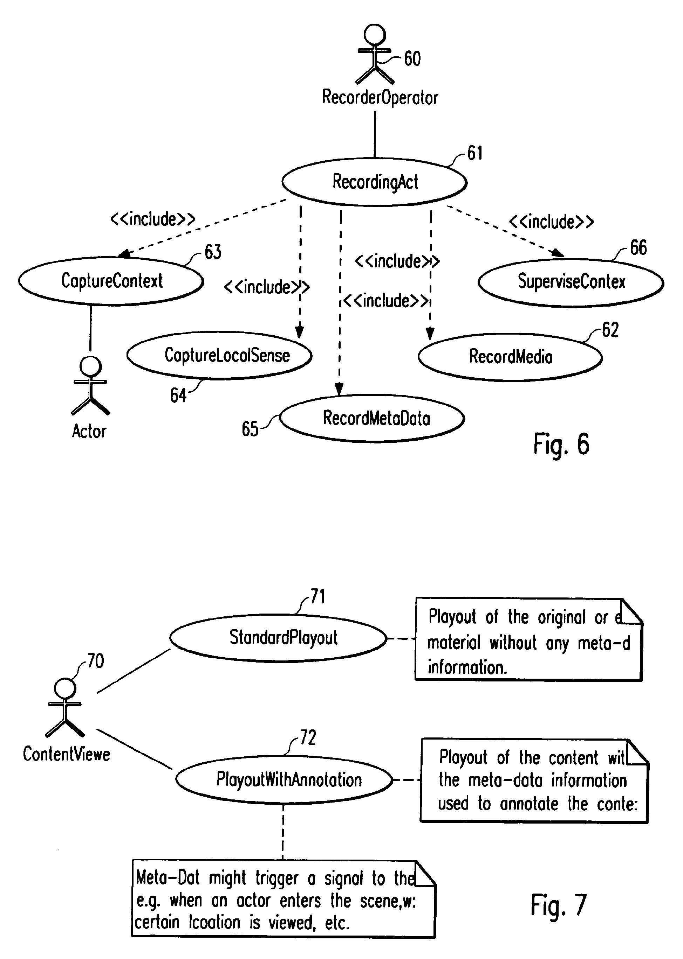

The diagram of Figure 6 illustrates the actions involved at a recording act. Each recording action causes a number of usecases performing certain tasks. When e.g. a recorder operator 60 initiates a recording act 61, this recording act includes the execution of a record media 62, a capture context 63, a capture local sensors 64, a record meta-data 65, and a supervise context 66 usecase.

The record media 62 usecase takes care of a recording of the actual content-data. The gathering and processing of an actual context is done by the capture context 63 usecase. A checking for local sensors, like e.g. the local time, GPS data or the like, is assumed by the capture local sensors 64 usecase. The task of the record meta-data 65 usecase is the recording of meta-data compiled from the context-information. This can happen either at start-up time or whenever meta-data change. The supervisor context 66 use case checks the current user context for changes. Changes trigger an update of the recorded meta-data.

Figure 7 demonstrates different modes for viewing annotated content. In the "standard playout" 71 mode, the content is ordinarily viewed, i.e. a video or a still image are shown without any chroma keying. In a "playout with annotation" 72 mode, the stored meta-data are displayed together with the content-data. Additional information can be generated from the stored meta-data and presented to the user 70, like e.g. signalling the user 70 whenever an actor enters the scene.

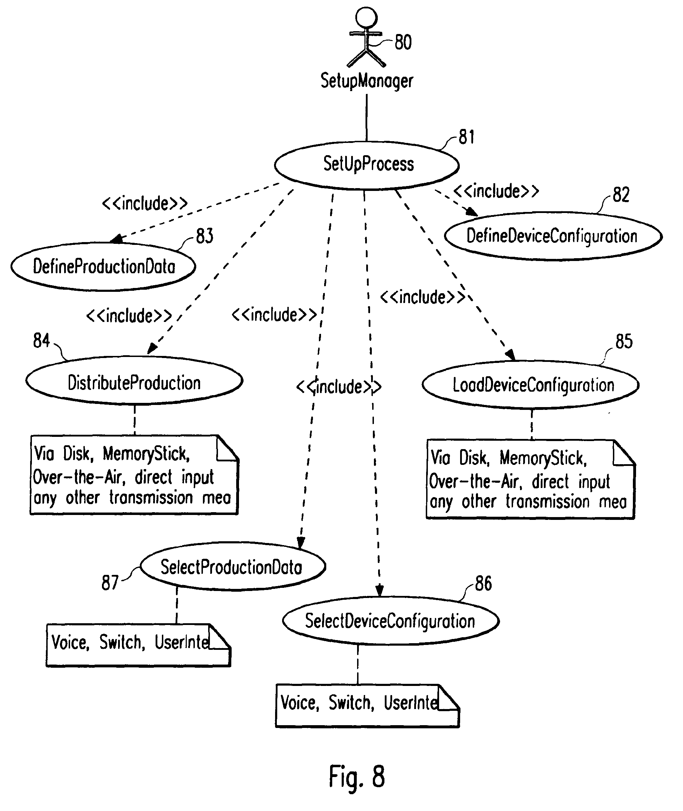

The set-up usecase of Figure 8 performs the process of setting up 81 devices before they are used in a recording. The role of a set-up manager 80 is that of setting up the different devices. There can be more than one set-up manager fulfilling the task. In a production scenario, the set-up manager 80 might be a director assistant. In a holiday scenario, the set-up manager is likely to be the owner of the recording device himself.

The define device configuration 82 usecase describes the process to define the data a device might contribute as context. For example, a user might need to input her or his personal information in a PID. The set-up can be done either on the device itself or on a separate editing entity. Besides raw data, also access rights might be entered for a device configuration. Further, data might as well be entered directly as in form of a context configuration defining a certain context matter for the device to collect and/or produce context information accordingly.

The define production data 83 usecase describes the process where a set-up manager creates production data. In a production scenario, this can include an editing of the production name, a production number and a location. In a holiday scenario, this could include a creation of a name for a holiday, the time and other data that should be associated with the record. The production data might be edited on the recording device itself or on a separate device like a personal computer or a television set.

If the production data are not directly created on the device involved, the data can be distributed from the editing device by the distribute production data 84 usecase to the target devices. The data can be transmitted to the related devices through any means of communication or through other media like e.g. a Memory Stick, a floppy disk or the like.

The load device configuration 85 usecase handles the loading of device information. This can be carried out via any type of network like described above or by other input means like voice input or a data carrier.

The select device configuration 86 usecase allows to select among different sets of configurations for a device, either manually or automatically. An automatic process can involve an external signal which is sent to the device.

A device might further store more than just one set of production data. The select production data 87 usecase defines how the correct production set is selected. This can be accomplished manually by e.g. a button, a jog-dial or any other input means on the device itself and supported by audible and/or visual feedback. The selection of a correct set of production data can also be done automatically, whereby an external signal which is sent to the device might be involved.

Thus, the present invention provides an automatic as much as a partly manually supported creation of meta-data through context sensing during a production of content-data by electronic means.

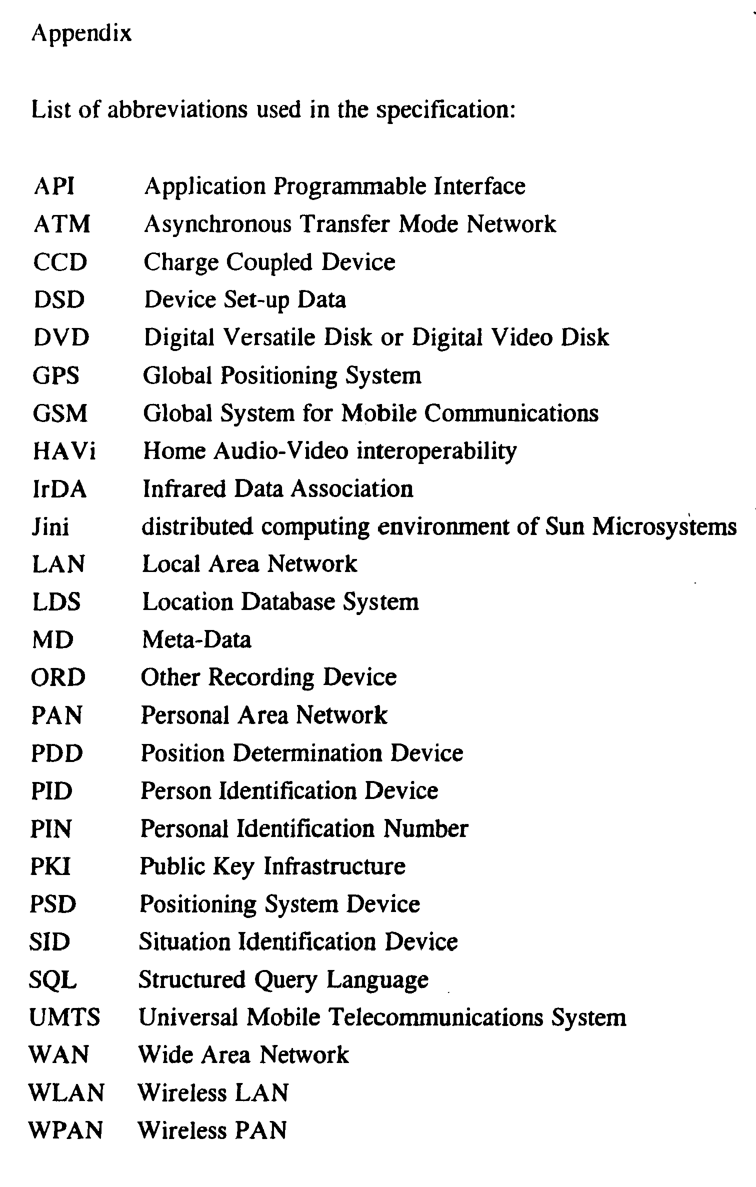

## Claims

1. Method of creating meta-data for content-data involving the following steps:
- creating content-data,
- sensing context information (18) related to the content-data from sources (13, 14, 15, 16, 17, 370) of related context information (18),
- gathering meta-data representing context information (18) from detected sources (13, 14, 15, 16, 17, 370) of context information, and
- storing content-data and meta-data.

2. Method according to claim 1,
**characterised in**
**that** context information (18) is retrieved from the content-data itself.

3. Method according to claim 1 or 2,
**characterised in**
**that** sources of context information (13, 14, 15, 16, 17, 370) are accessed via a wireless (12) and/or wired network (12).

4. Method according to claim 1, 2 or 3,
**characterised in**
**that** at least part of the data transmission to and from sources of related context information is implemented employing a public key infrastructure (54).

5. Method according to one of the claims 1 to 4,
**characterised in**
**that** context information (18) is prepared prior to creating content-data.

6. Method according to one of the claims 1 to 5,
**characterised in**
**that** sensing of context information (18) is configured to focus on certain context matter.

7. Method according to one of the claims 1 to 6,
**characterised in**
**that** only meta-data complying one or more rules are stored.

8. Method according to one of the claims 1 to 7,
**characterised in**
**that** meta-data are stored within the content-data.

9. System for creating meta-data for content-data according to a method of one of the claims I to 8 comprising
- context sensing means (340) for sensing context information related to content-data by detecting sources of context information,
- meta-data gathering means (320) for gathering meta-data from detected sources of context information, and
- storing means (331) for storing content-data and meta-data.

10. System according to claim 9,
**characterised by**
a recording means (330) for recording content-data.

11. System according to claim 9 or 10,
**characterised in**
**that** a source of context information (13, 14, 15, 16, 17, 370) provides personal information data about a user utilising said source of context information.

12. System according to claim 9, 10 or 11,
**characterised in**
**that** a source of context information (13, 14, 15, 16, 17, 370) provides information concerning the location of an entity.

13. System according to one of the claims 9 to 12,
**characterised in**
**that** a source of context information (13, 14, 15, 16, 17, 370) provides situation identifying information.

14. System according to one of the claims 9 to 13,
**characterised in**
**that** a source of context information (13, 14, 15, 16, 17, 370) comprises a context serving means (51) for giving access to the context information (18) provided and/or an access control to regulate an access to said context information.

15. Software product for creating meta-data for content-data adapted to perform a method according to one of the claims 1 to 8 when being stored on a storage means and executed by a processing means.
